# EUROPÄISCHE PATENTANMELDUNG

(11) **EP 2 522 976 A1**
(43) Veröffentlichungstag der Anmeldung: **14.11.2012**
(21) Anmeldenummer: 11003899.9
(22) Anmeldetag: 12.05.2011
(51) Int. Cl.: G01M 13/02, G01M 17/007

(54) **Vorrichtung zur Betätigung eines Schalthebels**

(71) Anmelder: Stähle, Kurt, 75242 Neuhausen-Steinegg (DE)
(72) Erfinder: Stähle, Kurt, 75242 Neuhausen-Steinegg (DE)
(74) Vertreter: Schön, Thilo

(57) **Zusammenfassung**

Eine Vorrichtung (2) zur Betätigung eines Schalthebels (4) für die Auswahl eines Getriebeganges eines Kfz (6) umfasst ein Anschlusselement (8) zur Betätigung des Schalthebels (4), ein zur beweglichen Lagerung des Anschlusselementes (8) dienendes Gestänge (10), das einen ersten Schwenkträger (24), der um eine erste Drehachse (D1) herum entlang einer ersten Schwenkrichtung (R1) verschwenkbar an einer Basis (18) gelagert ist, und einen zweiten Schwenkträger (38) aufweist, der mit dem ersten Schwenkträger (24) gekoppelt verschwenkbar ist, sowie eine Antriebsanordnung (12) zur Verlagerung des an dem Gestänge (10) gehaltenen Anschlusselementes (8). Dabei ist vorgesehen, dass der erste Schwenkträger (24) an einem basisseitigen Ende (26) über ein Drehlager mit genau einem Freiheitsgrad an der Basis (18) gelagert ist und der zweite Schwenkträger (38) an einem basisseitigen Ende (40) eine Basislagerung (BL) aufweist, mittels derer der zweite Schwenkträger (38) quer zur ersten Schwenkrichtung (R1) verschwenkbar an der Basis (18) gelagert ist.

## Beschreibung

Die Erfindung betrifft eine Vorrichtung zur Betätigung eines Schalthebels für die Auswahl eines Getriebeganges eines Kfz, nach dem Oberbegriff des Anspruchs 1. Die Vorrichtung weist hierbei ein Anschlusselement zur Betätigung des Schalthebels auf. Dieses ist über ein Gestänge beweglich gehalten. Das Gestänge weist einen ersten Schwenkträger, der entlang einer ersten Schwenkrichtung verschwenkbar an einer Basis gelagert ist, und einen zweiten Schwenkträger auf, der mit dem ersten Schwenkträger gekoppelt verschwenkbar ist. Ferner ist eine Antriebsanordnung zur Verlagerung des Gestänges bzw. des an dem Gestänge gehaltenen Anschlusselementes vorgesehen.

Derartige Vorrichtungen dienen zur automatisierten Steuerung eines Kfz, beispielsweise um einen ferngesteuerten oder einen computergesteuerten Betrieb im Zuge eines Langzeittests zu ermöglichen.

Aus US 6,141,603 ist ein Roboter zum Betrieb eines Kfz bekannt. Dieser weist eine Vorrichtung zur Betätigung eines Schalthebels auf. Die Vorrichtung umfasst eine Hülse zur Aufnahme des Schalthebels, die durch einen ersten Linearantrieb entlang einer ersten Richtung verlagerbar ist. Der erste Linearantrieb ist dabei wiederum an einem zweiten Linearantrieb gehalten, der eine Verlagerung des ersten Linearantriebes entlang einer zweiten Richtung ermöglicht, die senkrecht zur ersten Richtung gerichtet ist.

Eine weitere Vorrichtung zur Betätigung eines Schalthebels, die im Betrieb einen relativ geringen Platzbedarf aufweist, ist unter der Produktbezeichnung AP-SA der Firma Stähle GmbH, D-Wimsheim bekannt. Diese weist ein Anschlusselement auf, das an einem Gestänge mit zwei Schwenkträgern gehalten ist, die über eine Traverse miteinander gekoppelt und gegenüber einer Basis entlang einer ersten Schwenkrichtung verschwenkbar sind. Der dem Anschlusselement zugewandte Schwenkträger ist dabei durch zwei Parallelogrammartig angeordnete Trägerelemente gebildet, die gemeinsam mit dem ersten Schwenkträger entlang einer zur ersten Schwenkrichtung senkrecht stehenden zweiten Schwenkrichtung gekoppelt verschwenkbar sind.

Durch die bei dieser Vorrichtung mittels kombinierter Schwenkbewegung der Schwenkträger erzeugten Verlagerung des Anschlusselementes wird hierbei im Betrieb insbesondere im Bereich der Basis nur ein relativ kleiner Bewegungsraum benötigt.

Die Aufgabe der Erfindung ist es, bei einer gattungsgemäßen Vorrichtung den für den Betrieb benötigten Platzbedarf weiter zu verringern.

Diese Aufgabe wird durch eine Vorrichtung mit den Merkmalen des Anspruchs 1 gelöst. Dabei ist der erste Schwenkträger an einem basisseitigen Ende über ein Drehlager mit genau einem Freiheitsgrad an der Basis gelagert. Zudem weist der zweite Schwenkträger an einem basisseitigen Ende eine Basislagerung auf, mittels derer der zweite Schwenkträger quer zur ersten Schwenkrichtung verschwenkbar an der Basis gelagert ist. Hierdurch bewegt sich der erste Schwenkträger im Betrieb lediglich entlang der ersten Schwenkrichtung, d.h. er führt im Wesentlichen eine reine vorwärts-/rückwärts-Bewegung aus. Zusätzlich zu dieser Bewegung entlang der ersten Schwenkrichtung kann am zweiten Schwenkträger eine Schwenkbewegung entlang der zweiten Schwenkrichtung ausgeführt werden, um eine reine seitwärts-Bewegung ausführen oder eine vorwärts-/rückwärts-Bewegung entlang der ersten Schwenkrichtung mit einer seitwärts-Bewegung entlang der zweiten Schwenkrichtung überlagern zu können. Auf diese Weise kann die Bewegungscharakteristik von Teilen des Gestänges relativ gut an die Bewegungen eines die Gangschaltung bedienenden menschlichen Arms angepasst werden. Zudem lässt sich der von der Vorrichtung während der Betätigung des Schalthebels benötigte Arbeitsraum, der sich aufgrund der reinen vorwärts-/rückwärts-Bewegung des ersten Schwenkträgers im Wesentlichen kreissegmentförmig erstreckt, problemlos auf den Zwischenraum zwischen Fahrersitz und Beifahrersitz des Kfz abstimmen.

In einer besonders bevorzugten Ausführungsform weist die Basislagerung des zweiten Schwenkträgers hierzu ein zweifaches Drehlager, das heißt ein um zwei nicht parallele Drehachsen verdrehbares und folglich mindestens zwei Freiheitsgrade aufweisendes Lager auf. Hierdurch kann eine ungestörte Bewegung des zweiten Schwenkträgers sowohl entlang der ersten Schwenkrichtung als auch entlang der zweiten Schwenkrichtung gewährleistet werden.

Dabei ist es günstig, wenn das zweifache Drehlager ein erstes Trägerelement, das um eine zweite Drehachse herum verschwenkbar an der Basis gelagert ist, und ein zweites Trägerelement aufweist, das um eine dritte Drehachse herum verschwenkbar an dem ersten Trägerelement gelagert ist. Auf diese Weise ist eine besonders Platz sparende Ausführung des zweifachen Drehlagers möglich.

Vorteilhafterweise erstreckt sich das erste Trägerelement U-förmig um die zweite Drehachse und bildet dabei zwei freie Enden, an denen jeweils ein freies Ende des zweiten Trägerelementes verdrehbar gelagert ist. Dabei erstreckt sich das zweite Trägerelement U-förmig um das erste Trägerelement herum. Auf diese Weise ist sowohl eine stabile Lagerung des ersten Trägerelementes gegenüber der Basis als auch eine stabile Lagerung des zweiten Trägerelementes an dem ersten Trägerelement gewährleistet.

Zudem ist es günstig, wenn sich das erste Trägerelement um einen Drehantrieb herum erstreckt, der die zweite Drehachse bildet. Auf diese Weise kann das erste Trägerelement beispielsweise direkt mit einem Rotor des Drehantriebs gekoppelt werden und dadurch auch die Antriebsanordnung Platz sparend in die übrige Vorrichtung integriert werden.

Vorteilhafterweise ist der erste Schwenkträger an einem ersten freien Ende über eine Traverse mit einem zweiten freien Ende des zweiten Schwenkträgers gekoppelt, wobei zwischen dem ersten freien Ende und der Traverse ein doppeltes Drehlager vorgesehen ist. Hierdurch können beide Schwenkträger in der Art eines Parallelogramms entlang der ersten Schwenkrichtung gekoppelt verschwenkt werden, wobei die Schwenkbewegung ungestört mit einer hierzu quer gerichteten Schwenkbewegung entlang der zweiten Schwenkrichtung am zweiten Schwenkträger überlagert werden kann.

Ferner ist es günstig, wenn am zweiten freien Ende des zweiten Schwenkträgers eine Tragarmanordnung gehalten ist, die das Anschlusselement trägt und die zwei Tragarme aufweist, die parallelogrammartig angeordnet sind, um das Anschlusselement in stabiler Weise am zweiten Schwenkträger abstützen zu können.

In einer weiteren vorteilhaften Ausführungsform ist die Tragarmanordnung gegenüber dem zweiten Schwenkträger positionsfest verriegelbar. Hierdurch kann das Anschlusselement zunächst im unverriegelten Zustand der Tragarmanordnung an dem betreffenden Schaltknüppel positioniert werden. Anschließend erfolgt dann die Verriegelung der Tragarmanordnung, um den Schalthebel mit ausreichenden Schaltkräften beaufschlagen zu können.

In den Figuren ist eine beispielhafte Ausführungsform der Erfindung dargestellt. Es zeigen:
- Figur 1: eine Seitenansicht der erfindungsgemäßen Vorrichtung zur Betäti-gung eines Schalthebels,
- Figur 2: eine perspektivische Vorderansicht der Vorrichtung nach Figur 1 in einer seitlich verschwenkten Stellung und
- Figur 3: eine Draufsicht auf die Vorrichtung nach Figur 1.

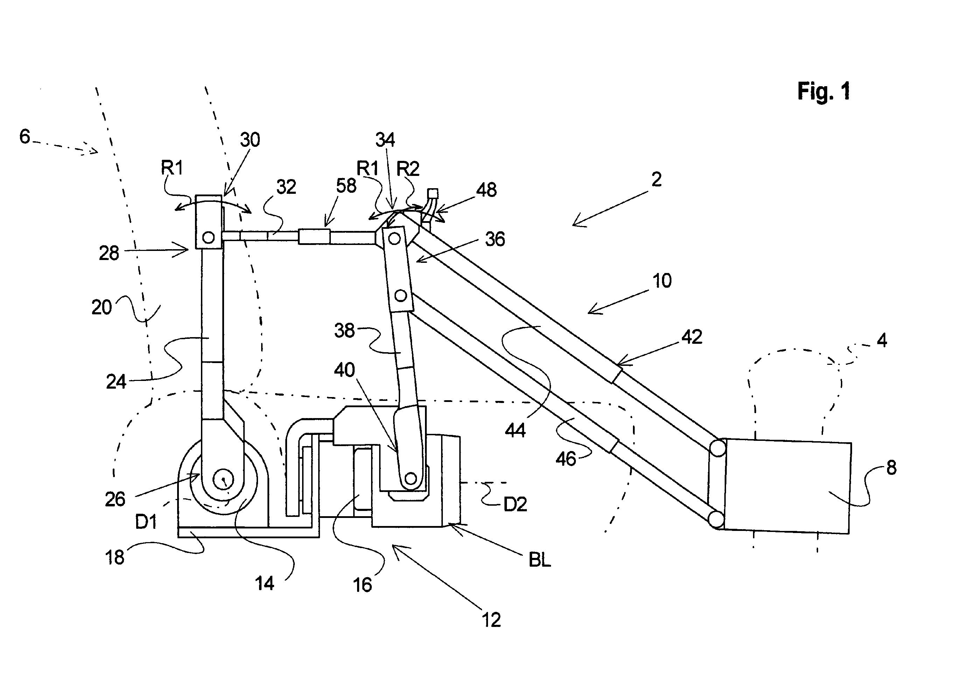

Fig. 1 zeigt eine Vorrichtung 2 zur Betätigung eines Schalthebels 4, mittels dem ein Getriebegang eines Kfz 6 ausgewählt werden kann. Die Vorrichtung 2 weist hierzu ein Anschlusselement 8 auf, das zur formschlüssigen Aufnahme des Schalthebels 4 beispielsweise hülsenförmig ausgeführt sein kann.

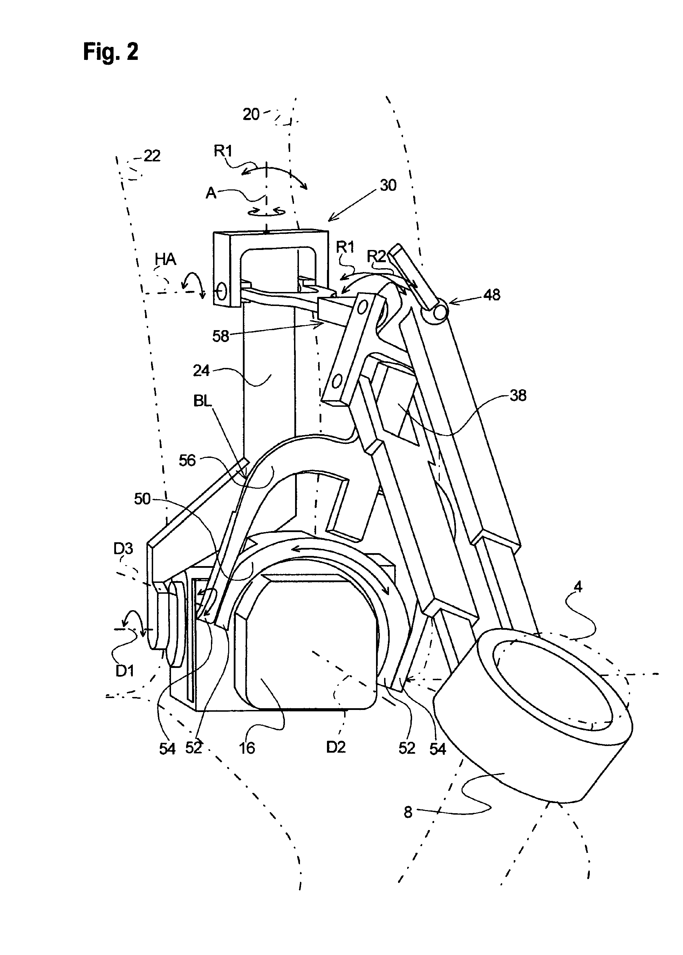

Das Anschlusselement 8 ist über ein Gestänge 10 mit einer Antriebsanordnung 12 verbunden, die einen ersten Drehantrieb 14 und einen zu diesem senkrecht angeordneten zweiten Drehantrieb 16 umfasst. Beide Drehantriebe 14, 16 sind dabei an einer Basis 18 gehalten, die in dem betreffenden Kfz 6 zwischen einem Fahrersitz 20 und einem Beifahrersitz 22 montiert werden kann, wie insbesondere aus Fig. 2 zu entnehmen ist.

Wie aus Fig. 1 ferner zu entnehmen ist, weist das Gestänge 10 einen ersten Schwenkträger 24 auf, der an einem basisseitigen Ende 26 mit dem ersten Drehantrieb 14 verbunden ist und von diesem ausschließlich um eine erste Drehachse D1 herum entlang einer ersten Schwenkrichtung R1 hin- und herbewegt werden kann. Auf diese Weise bildet der Drehantrieb 14 bezüglich des ersten Schwenkträgers 14 ein Drehlager mit genau einem Freiheitsgrad.

An einem vom ersten Drehantrieb 14 abgewandten, ersten freien Ende 28 ist der erste Schwenkträger 24 über ein erstes Traversenlager 30, eine Traverse 32 und ein zweites Traversenlager 34 mit einem zweiten freien Ende 36 eines zweiten Schwenkträgers 38 gekoppelt, der an einem basisseitigen Ende 40 mit dem zweiten Drehantrieb 16 verbunden ist. Mittels diesem ist der zweite Schwenkträger 38 um eine zweite Drehachse D2 herum entlang einer zweiten Schwenkrichtung R2 hin- und herbewegbar.

An dem zweiten Schwenkträger 38 ist zudem eine Tragarmanordnung 42 gehalten, die den zweiten Schwenkträger 38 mit dem Anschlusselement 8 verbindet. Hierzu weist diese einen ersten Tragarm 44 und einem zweiten Tragarm 46 auf, die parallelogrammartig angeordnet sind, d.h., dass sie sowohl gegenüber dem zweiten Schwenkträger 38 als auch gegenüber dem Anschlusselement 8 derart verschwenkbar sind, dass sie permanent parallel zueinander ausgerichtet sind.

Wie aus Figur 1 weiter zu entnehmen ist, ist hierbei am zweiten Traversenlager 34 eine Verriegelung 48 vorgesehen, mittels der die Tragarmanordnung 42 gegenüber dem zweiten Schwenkträger 38 positionsfest verriegelbar ist.

Wie insbesondere aus Figur 2 zu entnehmen ist, ist an dem zweiten Drehantrieb 16 ein erstes Trägerelement 50 vorgesehen, das den Drehantrieb 16 U-förmig umgreift. Das erste Trägerelement 50 ist hierbei direkt mit einem Rotor des zweiten Drehantriebs 16 gekoppelt (nicht dargestellt), so dass es von diesem um die zweite Drehachse D2 herum angetrieben werden kann.

Das erste Trägerelement 50 weist dabei zwei freie Enden 52 auf, an denen wiederum zwei freie Enden 54 eines zweiten Trägerelementes 56 um eine dritte Drehachse D3 herum verdrehbar gelagert sind. Das zweite Trägerelement 56 ist hierbei beispielhaft einstückig mit dem zweiten Schwenkträger 38 ausgebildet und umgreift das erste Trägerelement 50 ebenfalls U-förmig.

Auf diese Weise bilden die beiden Trägerelemente 50, 56 zusammen mit dem zweiten Drehantrieb 16 ein zweifaches Drehlager, das als Basislagerung BL des zweiten Schwenkträgers 38 fungiert.

Zudem ist auch das erste Traversenlager 30 als zweifaches Drehlager ausgebildet, das neben einer Drehbewegung um eine Hauptachse A des ersten Schwenkträgers 24 herum eine weitere Schwenkbewegung um eine zur Hauptachse A senkrecht stehende horizontale Achse HA ermöglicht.

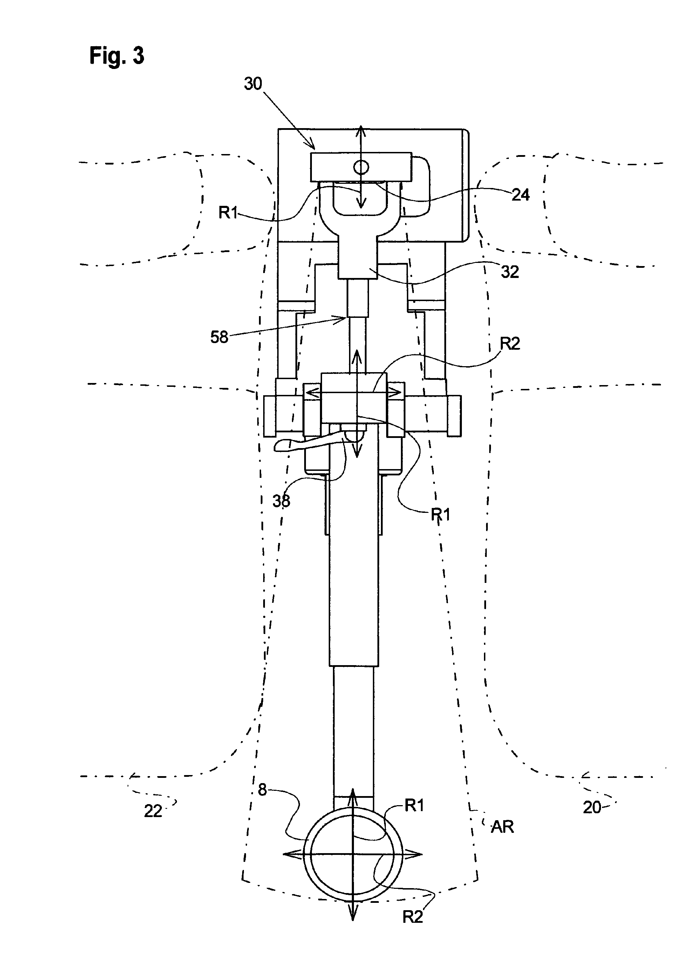

Die Basislagerung BL und das erste Traversenlager 30 sowie ein zusätzliches Verwindungslager 58 entlang der Traverse 32 ermöglichen auf diese Weise eine Bewegung des zweiten Schwenkträgers 38 bzw. des Anschlusselementes 8, die sowohl entlang der ersten Schwenkrichtung R1 als auch im Gegensatz zum ersten Schwenkträger 24 entlang der zweiten Schwenkrichtung R2 möglich ist, wie insbesondere aus Figur 3 zu entnehmen ist.

Entlang der ersten Schwenkrichtung R1 benötigt die Vorrichtung 2 zur Betätigung des Schalthebels 4, gemäß der Darstellung in Fig. 3, einen im Grundriss kreissegmentförmigen Arbeitsraum AR, der sich besonders einfach auf die vorhandenenen Zwischenräume zwischen Fahrersitz 20 und Beifahrersitz 22 abstimmen lässt.

## Patentansprüche

1. Vorrichtung (2) zur Betätigung eines Schalthebels (4) für die Auswahl eines Getriebeganges eines Kfz (6),
mit einem Anschlusselement (8) zur Betätigung des Schalthebels (4), einem zur beweglichen Lagerung des Anschlusselementes (8) dienenden Gestänge (10), das einen ersten Schwenkträger (24), der um eine erste Drehachse (D1) herum entlang einer ersten Schwenkrichtung (R1) verschwenkbar an einer Basis (18) gelagert ist, und einen zweiten Schwenkträger (38) aufweist, der mit dem ersten Schwenkträger (24) gekoppelt verschwenkbar ist,
und einer Antriebsanordnung (12) zur Verlagerung des an dem Gestänge (10) gehaltenen Anschlusselementes (8),
**dadurch gekennzeichnet, dass** der erste Schwenkträger (24) an einem basisseitigen Ende (26) über ein Drehlager mit genau einem Freiheitsgrad an der Basis (18) gelagert ist
und der zweite Schwenkträger (38) an einem basisseitigen Ende (40) eine Basislagerung (BL) aufweist, mittels derer der zweite Schwenkträger (38) quer zur ersten Schwenkrichtung (R1) verschwenkbar an der Basis (18) gelagert ist.

2. Vorrichtung nach Anspruch 1, **dadurch gekennzeichnet, dass** die Basislagerung (BL) des zweiten Schwenkträgers (38) ein zweifaches Drehlager aufweist.

3. Vorrichtung nach Anspruch 2, **dadurch gekennzeichnet, dass** das zweifache Drehlager ein erstes Trägerelement (50) aufweist, das um eine zweite Drehachse (D2) herum verdrehbar an der Basis (18) gelagert ist, und ein zweites Trägerelement (56) aufweist, das um eine dritte Drehachse (D3) herum verdrehbar an dem ersten Trägerelement (50) gelagert ist.

4. Vorrichtung nach Anspruch 3, **dadurch gekennzeichnet, dass** sich das erste Trägerelement (50) U-förmig um die zweite Drehachse (D2) erstreckt und dabei zwei freie Enden (52) bildet, an denen jeweils ein freies Ende (54) des zweiten Trägerelementes (56) verdrehbar gelagert ist, wobei sich das zweite Trägerelement (56) U-förmig um das erste Trägerelement (50) herum erstreckt.

5. Vorrichtung nach Anspruch vier, **dadurch gekennzeichnet, dass** sich das erste Trägerelement (50) um einen Drehantrieb (16) herum erstreckt.

6. Vorrichtung nach einem der Ansprüche 1 bis 5, **dadurch gekennzeichnet, dass** der erste Schwenkträger (24) an einem ersten freien Ende (28) über eine Traverse (32) mit einem zweiten freien Ende (36) des zweiten Schwenkträgers (38) gekoppelt ist, wobei zwischen dem ersten freien Ende (28) und der Traverse (32) ein doppeltes Drehlager vorgesehen ist.

7. Vorrichtung nach Anspruch 6, **dadurch gekennzeichnet, dass** am zweiten freien Ende (36) des Zweiten Schwenkträgers (38) eine Tragarmanordnung (42) gehalten ist, die das Anschlusselement (8) trägt und die zwei Tragarme (44, 46) aufweist, die parallelogrammartig angeordnet sind.

8. Vorrichtung nach Anspruch 7, **dadurch gekennzeichnet, dass** die Tragarmanordnung (42) gegenüber dem zweiten Schwenkträger (38) positionsfest verriegelbar ist.
